Europäisches Patentamt

(19) European Patent Office

Office européen des brevets

(11) Publication number : **0 305 442 B1**

(12) **EUROPEAN PATENT SPECIFICATION**

(45) Date of publication of patent specification :
**09.09.92 Bulletin 92/37**

(51) Int. Cl.⁵ : **A01N 37/22, A01N 43/06, A01N 43/80, A01N 43/84, A01N 47/34, A01N 47/36, A01N 55/02**

(21) Application number : **88902191.1**

(22) Date of filing : **08.03.88**

(86) International application number :
**PCT/HU88/00013**

(87) International publication number :
**WO 88/06841 22.09.88 Gazette 88/21**

(54) **FUNGICIDE COMPOSITIONS.**

The file contains technical information submitted after the application was filed and not included in this specification

(30) Priority : **09.03.87 HU 98387**

(43) Date of publication of application :
**08.03.89 Bulletin 89/10**

(45) Publication of the grant of the patent :
**09.09.92 Bulletin 92/37**

(84) Designated Contracting States :
**AT BE CH DE FR GB IT LI NL SE**

(56) References cited :
**EP-B- 0 026 873
DE-A- 2 515 091
DE-A- 2 903 612
W.Perkow, Wirksubstanzen der Pflanzenschutz und Schädlingsbekämpfungsmittel", 1971/1979, Verlag Paul Parey, Berlin undHamburg, see pages "Metalaxyl and Furalaxyl"
H.Martin and C.R. Worthing "Pesticide Manual", 5th edition, January 1977, British Crop Protection Council, see pages 227, 525
W.Perkow, "Wirksubstanzen der Pflanzenschutz- und Schädlingsbekämpfungsmittel", 1971/1979, Verlag Paul Parey, Berlin undHamburg, see pages "Aldimorph and Fenpropemorph"
H.Martin and C.R.Worthing "Pesticide Manual", 5th. edition, January 1977, British Crop Protection Council, see pages 33, 78,510, 511**

(73) Proprietor : **CHINOIN Gyogyszer és Vegyészeti Termékek Gyára RT.
To utca 1-5
H-1045 Budapest IV (HU)**

(72) Inventor : **DETRE, Tamás**
Jozsef A.u. 37/a
H-2626 Nagymaros (HU)
Inventor : **REJTÖ, Lajos**
Himzö u.2
H-1039 Budapest (HU)

Inventor : **SOS,Jozsef**
Hosszuház u. 2
H-1181 Budapest (HU)
Inventor : **SZEGÖ, András**
Krudy u. 3
H-1088 Budapest (HU)
Inventor : **SCHÜSZLER, Erzsébet**
Vadgesztenye u. 1
H-1047 Budapest (HU)
Inventor : **ANGYAN,Sandor**
Budafoki ut 33
H-1111 Budapest (HU)
Inventor : **MARMAROSINE KELLNER,Katalin**
Ybl M. s. 19
H-2051 Biatorbágy (HU)
Inventor : **OROS, Gyula**
Huszár u. 5
H-1074 Budapest (HU)
Inventor : **VIRANYI,Ferenc**
Törökvész ut 76/b
H-1025 Budapest (HU)
Inventor : **ERSEX,Tibor**
Damjanich u. 44
H-1174 Budapest (HU)
Inventor : **NAGYNE HEGYI, Gyöngyvér**
Somloi ut 20/b
H-1118 Budapest (HU)
Inventor : **HORNOK, Lászl**
Sáfrány u. 50
H-1116 Budapest (HU)
Inventor : **MOLNAR, Attila**
Lenin u. 12
H-3060 Pászt (HU)
Inventor : **LYR, Horst**
G. Herweght Str. 8
O-1300 Eberswalde (DE)
Inventor : **ZANKE, Dieter**
Hans-Marchwitza-Ring 29
O-1595 Potsdam (DE)
Inventor : **LENNER, Brita**
Karl-Marx-Str. 123
O-1532 Kleinmachnow (DE)
Inventor : **STRUMP, Marlies**
Toni-Stemmler Str. 16
O-1580 Potsdam (DE)

(74) Representative : **Patentanwälte Beetz sen. - Beetz jun. Timpe - Siegfried - Schmitt-Fumian
Steinsdorfstrasse 10
W-8000 München 22 (DE)**

## Description

The invention relates to synergistic combinations of known fungicides and their application in plant protection.

N-alkyl-morpholines are applied as fungicides in plant protection (DE 1164152 and 1198125, and DD 140112).

A disadvantage of the known agents is that they have only a narrow spectrum of activity, especially for mildew fungi (Erysiphales) in cereals. Because of their phytotoxic side effects they can be used only in a restricted field of application.

The various acylamide derivatives (DD 118 979 and 118 510, DE 2 515 091, 1 448 810 and 2 903 612, GB 1 603 730 and EP 26 873), on the other hand, possess a good efficacy against fungi of the group of Oomycetes, but they are inactive against other plant pathogenic fungi of economical importance.

Furthermore, it is known that benzimidazole and dithiocarbamate fungicides are applied in plant protection to control fungal diseases (GB 1 193 461, 1 190 614 and 1 000 137). A disadvantage of the benzimidazole fungicides results from the quick appearance of resistance in the target fungus population.

For the simultaneous control of different species of fungi the use of a mixture of N-alkylmorpholines with dithiocarbamates was recommended (DD 111 014).

It is also known that N-alkylmorpholine derivatives in combination with methyl-N-(2-methoxyacetyl)-N-(2,6-dimethylphenyl)-D,L-alaninate (HU T/33363) are beneficially used against fungal diseases.

EP-A-193 922 discloses synergistic fungicides and plant growth regulating agents comprising a combination selected from a specific group of morpholines and a fungicide selected from a specific group of acyl alanines. Ternary combinations with these fungicides are not mentioned in this document.

It is the object of the invention to provide fungicide compositions having better properties for the practical control of fungal diseases and a corresponding treatment method.

The above object is achieved according to claims 1 and 10. The dependent claims relate to preferred embodiments.

The fungicide compositions of the present invention contain as active ingredient a mixture of
(A) One of the following fungicides:

$(A_1)$ Methyl-N-(2,6-dimethylphenyl)-N-(2′-methoxyacetyl)-D,L-alaninate (Metalaxyl),

$(A_2)$methyl-N-(2,6-dimethylphenyl)-N-furoyl-(2)-D,L-alaninate (Furalaxyl),

$(A_3)$methyl-N-(phenylacetyl-N-(2,6-dimethylphenyl)-D,L-alaninate (Benalaxyl),

$(A_4)(\pm)$- α-(2-chloro-N-(2,6-dimethylphenyl)-acetamido)-γ-butyrolactone (Ofurace),

$(A_5)(\pm)$- α-[N-(3-chlorophenyl)-cyclopropane-carboxamido]-γ-butyrolactone (Cyprofuram),

$(A_6)$2-methoxy-N-(2-oxo-1,3-oxazolidin-3-yl-aceto-2′6′-xylidide (Oxadixyl),

$(A_7)$methyl-N-isoxazol-5-yl-N-(2,6-dimethylphenyl)-D,L-alaninate (LAB 149202 F),

$(A_8)$N-(2,6-dimethylphenyl)-2-methoxy-N-(tetrahydro-2-oxofuranyl)-acetamide (RE 26745),

and
(B) one of the following morpholine fungicides:

$(B_1)$ 2,6-Dimethyl-4-tridecylmorpholine (Tridemorph),

$(B_2)$ 4-cyclododecyl-2,6-dimethylmorpholine (Dodemorph),

$(B_3)(\pm)$-cis-4-[3-(4-tert-butylphenyl)-2-methyl-propyl]-2,6-dimethylmorpholine (Fenpropimorph),

$(B_4)$ mixture of N-alkyl($C_{12}$)-2,6-dimethylmorpholine and
N-alkyl($C_{12}$)-2,5-dimethylmorpholine (Aldimorph),

together with either
(C) one of the following fungicides:

$(C_1)$Diethyl-4,4′-(o-phenylene)-bis(3-thioallophanate) (Thiophanate),

$(C_2)$dimethyl-4,4′-(o-phenylene)-bis(3-thioallophanate) (Thiophanat-Methyl),

$(C_3)$methyl-benzimidazol-2-yl-carbamate (Carbendazim or BCM),

$(C_4)$methyl-1-(butylcarbamoyl)-benzimidazol-2-yl-carbamate (Benomyl),

$(C_5)$2-thiazol-4-Yl-1H-benzimidazole (Thiabendazol),

or
(D) one of the following dithiocarbamate or disulfide fungicides:

$(D_1)$ Zinc ethylene-bis(dithiocarbamate) (polymeric) (Zineb),

$(D_2)$ manganese ethylene-bis(dithiocarbamate) (polymeric) (Maneb),

$(D_3)$ manganese ethylene-bis(dithiocarbamate) (polymeric) complex with zinc salt (Mancozeb),

$(D_4)$ tris[zink ammoniate-ethylene-bis(dithiocarbamate)]-tetrahydro-1,2,4,7-dithiadiazocin-3,8-dithione (polymeric) (Metiram),

$(D_5)$ zinc propylene-bis(dithiocarbamate) (polymeric) (Propineb),

($D_6$) mixture of tris[Zink ammoniate-ethylene-bis-(dithiocarbamate)]-tetrahydro-1,2,4,7-dithiadiazocin-3,8-dithione (polymeric) (Metiram) and

zinc propylene-bis(dithiocarbamate) (Propineb),

in a ratio of 1:3 (Polycarbazin),

wherein the weight ratio of the components A:B:C is 1:3-5:1-6, and the weight ratio of the components A:B:D is 1:3-5:5-10, and the ratio A:B:C may also be in the case of the mixture $A_7B_4C_4$ equal to 1:2:2, and in the case of the mixture $A_3B_1C_4$ equal to 1:1,11:1,22, and the ratio A:B:D may also be in the case of the mixtures $A_6B_1D_2$ and $A_6B_1D_3$ equal to 1:4:4,

in addition to conventional carriers and auxiliaries.

The active ingredient mixture amounts to 5 - 95 percent by weight.

In the compositions of the invention, the ratio of the components A, B and C is advantageously 1:4:4, and the ratio of the components A, B and D is advantageously 1:4:10. The compositions according to the invention can be advantageously used to control diseases caused by various species of fungi.

Surprisingly it was found that the fungicide compositions of the invention have an increased activity against numerous species of fungi, which is based on a synergistic, superadditive effect. This can be calculated e.g. according to the Colby formula

$$E \ = \ X \ + \ Y - \frac{X \cdot Y}{100} \ ,$$

wherein

X is the efficiency of the components A + B,

and

Y is the efficiency of the components C + D.

Another method of determination of synergism is based on the HORSFALL model where the toxic effects of various treatments are compared at the same concentration level, i.e., each component of the fungicide mixture is tested with the total amount of the mixture applied, and the criterion of synergism is as follows:

$$LSD_{5\%}^{comb} < |X_i| \ = \ CT_i - MRV_{max},$$

wherein

$LSD_{5\%}^{comb}$ is the lowest standard deviation at P = 5 % in the experiment,

$CT_i$ is the efficiency of the "i" variant of the treatment with the fungicidal mixture,

$MRV_{max}$ is the maximum response value of the most toxic combination partner, if it was used alone, with the total amount of the mixture concerned.

Positive $X_i$ indicates synergism, negative $X_i$ indicates antagonism.

In the SUN model, a Comparative Toxicity Index is calculated as follows:

$$Co.T.I. \ = \ \frac{1/ED_{50}^{mixt}}{\dfrac{a}{ED_{50}^Y} + \dfrac{b}{ED_{50}^Z}} \ ,$$

wherein

$ED_{50}$ is the efficiency of the known mixture $\underline{Y}$,

$ED_{50}^B$ is the efficiency of the active ingredient $\underline{Z}$, and

$\underline{a}$ and $\underline{b}$ indicate the current mass parts of the partners $\underline{Y}$ and $\underline{Z}$ in the combination.

An additional advantage of the composition of the present invention resides in the reduced risk of resistance formation, that means in the reduced occurence of fungal strains resistant against the above-mentioned compounds under the selection pressure of the-claimed fungicides. This is due to the different mode of action of the components, and to the abscence of positive cross-resistance among the components.

Due to the above-mentioned reasons, the compositions according to the invention can be used for the reduction of heterogeneous fungal populations, which cannot be controlled satisfactorily by conventional application of the individual components and/or of their binary mixtures. Based on the systemic properties of some components, phytopathogenic fungi such as Plasmopara halstedii (Peronosporales, Ooomycetes), Peronospora manshurica (Peronosporales, Oomycetes), Sclerospora graminicola (Peronosporales, Oomycetes), S.macrospora, Peronospora pisi (Peronosporales, Oomycetes), Ustilago maydis (Ustilaginales, Basidiomycetes), Ustilago avenae (Ustilaginales, Basidiomycetes), Fusarium oxysporum (Deuteromycetes), Verticillium spp. (Deuteromycetes), Rhizoctonia solani (Polyporales, Basidiomycetes), Stereum purpureum (Basidiomycetes), etc., can be controlled effectively, and newly developed parts of the plants can also be protected. With an optimal combination of the active ingredients according to the invention the following groups of phytopathogenic fungi can be controlled: Powdery mildews, for example Erysiphe spp. (Erysiphales, Ascomycetes), Aspergillus spp. (Eurotiales, Ascomycetes), Penicillium spp. (Eurotiales, Ascomycetes), Phoma betae (Dothiales, Ascomycetes), Ph. macdonaldii, Didymella applanata (Dothiales, Ascomycetes), Fusarium graminearum (Hypocreales, Ascomycetes), Nectria cinnabarina (Hypocreales, Ascomycetes), Venturia inaequalis (Dothiales, Ascomycetes), Khuskia oryzae (Sphaeriales, Ascomycetes), Colletotrichum atramantarium (Sphaeriales, Ascomycetes), Coll. dematium, Diaporthe phaseolorum (Sphaeriales, Ascomycetes), Phomopsis mali (Sphaeriales, Ascomycetes), Ceratocysticum ulmi (Sphaeriales, Ascomycetes), Botrytis spp. (Helotiales, Ascomycetes), Sclerotinia sclerotiorum (Helotiales, Ascomycetes), Ustilago spp. (Ustilaginales, Basidiomycetes), Verticillium sppl. Rhizoctonia solani (Polyporales, Basidiomycetes), St. purpureum., Tr. versicolor, Sphaeropsis malorum, Pythium spp. (Peronosporales, Oomycetes), Phytophthora spp. (Peronosporales, Oomycetes), Albugo candida, (Peronosporales, Oomycetes), Bremia lactucae (Peronosporales, Oomycetes), Peronospora destructor (Peronosporales, Oomycetes), Plasmopara viticola (Peronosporales, Oomycetes), Pseudoperonospora cubensis (Peronosporales, Oomycetes), Peronospora spp. (Peronosporales, Oomycetes), Alternaria spp. (Deuteromycetes), Fusarium oxysporum and other Fusarium spp. (Deuteromycetes), Verticillium spp. (Deuteromycetes). They are also useful against Gram-positive and Gram-negative bacteria (Corynebacterium michiganense, C. nebraskense, C. flaccumfaciens and Xanthomonas malvacearum, X. phaseoli, X. translucens pv. oryzae), and human-related Bacillus, Staphylococcus and Streptomyces spp., too.

The compositions according to the invention can be formulated in a conventional way, e.g in the form of wettable powders, granulates or microcapsules, emulsion concentrates or flowables (WP, EC, FW, G, SD). For this purpose, the active ingredients are dissolved in conventional liquid carriers, if desired, in the presence of surface-active auxiliaries, or dispersed, or admixed with solid carriers, or formulated according to other known processes.

The compositions of the invention comprise the active ingredients in an amount of 5 to 95 weight percent, and advantageously in an amount of 5 to 50 weight percent. The compositions can be applied in conventional ways, e.g. by spraying, dusting or submerging for dispersion, or for seed dressing.

The applied quantities depend on the aim of application and generally amount to 0.3 to 5 kg of active ingredient/ha. The composition,of the invention may be used for the treatment of sugar beet (Beta vulgaris), sunflower, soya, potato, tomato, corn, wheat, cucumber, vine, tobacco, broom-corn, millet, horse-bean (Vicia faba), cotton, citrus spp.,apple, sugar-cane, avocado, mango (Mungos mungo), lettuce, anion, tulip, hyacinth, gladiolus (sword-lily), pea, bean, peanut, medic (Medicago), clover and batata (Xanthosoma spp.) plants susceptible to pathogenic fungal infections.

The composition according to the invention and their action are illustrated by the following examples.

Auxiliaries and filling materials used

a) Surface-active materials (wetting agents and emulsifying agents)

Tensilin FN 80 (Kutrilin): Alkyl-aryl-polyglycolether;
Triton X-l5, X-45 and X-ll4 (Rohm and Haas): octylphenolpolyglycolether;
Tensiofix CG 2l, B 7425 (Tensia): alkyl-aralkyl-sulphonate and phosphate, esters and non-ionic surface-active material mixtures, respectively;
Emulsogen M (Hoechst): fatty alcohol-polyglycolether;
Atlox 5320 (Atlas ICI): non-ionic surface-active material; wetting agent IS (Hoechst): Dialkylsulfosuccinate.

b) Dispersing agents:

Sodium-ligninesulfonate;
Atlox 4862: Alkyl-aryl-sulfonate-formaldehyde-condensate.

c) Anti-freezing agents:

Ethylene glycol

d) Filling and carrier materials:

Wessalon S (Degussa): synthetic silicic acid;
Aerosil 300 (Degussa): silicic acid with great specific surface;
Saccharose;
Zeolex 4l4 (Zeofin): sodium-aliminium-silicate;
Paraffin oil.

e) Sedimentation inhibitor

Tensiofix 82l (Tenzia): synthetic polysaccharide.

Example I

In 508 g of water 2l.2 g of Tensilin FN 80, 7.6 g of Tensiofix CG 2l, and 7.6 g of Tensiofix B 7425 are dissolved. To the solution with slow stirring 47.5 of ethylene-glycol and under vigorous stirring l56 g of Carbendazim and 38 g of LAB l49202 are added. After homogenization the suspension is transferred into an atritor of l.5 liter capacity which contains siliquartzite pearls of l mm in diameter. The atritor is operated for 30 minutes at a rotational speed of l440 $min^{-1}$ and then at 30 $min^{-1}$. To the suspension the following solution is added: l56 g of Tridemorph, 4 g of Triton X-l5, 3l.2 g of Triton X-ll4. After stirring, l6.8 g of paraffin oil and l.8 g of Emulsogen M are added to the suspension. After stirring the glass pearls (quartzite pearls) are separated by means of a screen. The floating capacity of the suspension concentrate amounts to 95% according to the CIPAC method.

Example 2

Into a powder homogenizer of 3 l capacity 200 g of Wessalon S are introduced. Then 26l g of Tridemorph, 6.6 g of Triton X-l5, 52.8 g of Triton X-ll4 and 6.6 g of Triton X-45 are added. By slow stirring a homogeneous solution is prepared. This solution is added to Wesselon S with slow stirring. After further stirring, 250 g of Carbendazim and 88 g of LAB l49202 are added. After 5 minutes of homogenization, 50 g of Atlox 5320 and 75 g of Atlox 4862 are added, and after further 5 minutes the mixture is completed by addition of l0 g of Aerosil. The powder mixture is granulated in 2 portions in a laboratory granulator with water (to 500 g of the powder mixture 66 ml of water are added). The granulate formed is dried in a drying oven at 60 °C till constant weight. The particle size distribution of the granulate is such that 95% are between 0.l and 0.6 mm. The floating capacity of the product obtained is 84 % according to CIPAC.

Example 3

Into a homogenizer of 3 l capacity l50 g of Zeolex 4l4 are filled as a carrier. In a separate vessel 266 g of Tridemorph, 6.8 g of Triton X-l5, 6.8 g of Triton X-45 and 54.2 g of Triton X-ll4 are mixed with slow stirring. A homogeneous solution is obtained, which is transferred into the homogenizer while uniformly stirring. After homogenizing 266 g of Carbendazim and 66.6 g of Benalaxyl are introduced. The mixture is homogenized; thereafter 88.6 g of saccharose, 30 g of wetting agent IS (Hoechst) and 65 g of sodium lignine-sulfonate are added with continuous stirring.

The powder mixture is ground in an air jet mill to a particle size of 10 μm. The floating capacity of the powder mixture obtained is 87% according to CIPAC, the wetting time is 18 s.

Example 4

In an atritor of l.5 l capacity 60.54 g of water and 6.55 g of ethylene glycol are mixed. To the solution 2.2l g of Tensiofix B 7425, l.7 g of Tensilin FN 80, l2.5 g of Carbendazim and 3.l g of Benalaxyl are added. The atritor is then filled with siliquartzite glass pearls of 2 mm in diameter, and the mixing mechanism of the atritor is operated for 30 min with a speed of 800 $min^{-1}$. After this period the following solution is added to the suspension: 9.4 g of Tridemorph, 0.23 g of Triton X-l5, 0.23 g of Triton X-45 and l.84 g of Triton X-ll4 (previously homogenized).

After stirring l.35 g of paraffin oil and 0.15 g of Emulsogen M are added to the mixture. The siliquartzite glass pearls are then filtered from the suspension. Thereafter, 0.2 g Tensiofix 82l are added to the solution with use of a stirrer with a big shearing moment.

The floating capacity of the suspension is 97% according to CIPAC 98% of the (particles 5 μm).

Example 5

To 605.4 g of water 65 g of ethylene glyxol, 22.2 g Tensiofix CG-2l and l7 g Tensilin FN-80 are added.

With application of a stirrer with a big shearing moment, l25 g of Carbendazim and 3l g of Metalaxyl are continuously added to the solution. Then, the suspension is homogenized at maximum speed of the stirrer (l2000 $min^{-1}$). The suspension is poured into a laboratory atritor of l500 ml, and the atritor is filled with ceramic pearls of l mm in diameter. The stirrer of the atritor is operated with maximum speed (l440 $min^{-1}$) for 30 minutes.

5

Thereafter a solution of 94 g of Tridemorph, 2.3 g of Triton X-I5, 2.3 g of Triton X-45 and I8.4 g of Triton X-II4 is introduced into the atritor, and stirring is continued for further 5 minutes. The glass pearls are then removed from the suspension with a screen. With application of a stirrer with a big shearing moment, a suspension consisting of I3.5 g of paraffin oil, I.5 g of Emulsogen M and 2 g of Tensiofix 82I previously prepared in a similar manner is added, and the material is homogenized for 3 minutes. The floating capacity of the suspension obtained is 92% according to CIPAC. The average particle size is such that 97% of the particles are < 5 $\mu$m.

Example 6

Into a laboratory powder homogenizer of 3 l capacity 300 g of Wessalon are introduced. To 266 g of Tridemorph 4 g of Triton X-I5, 4 g of triton X-45 and 25 g of Triton X-II4 are added with slow stirring. Then, the Tridemorph solution is slowly poured into the powder homogenizer with stirring. Thereafter, while further stirring, a mixture of 266 g of Carbendazim, 66 g of Metalaxyl, 30 g of the wetting agent IS and 39 g of sodium lignine sulfonate are added. After 2 minutes of post-homogenization the powder mixture is ground in a laboratory air jet mill to particles having a particle size of < 10 $\mu$m. The floating capacity of the powder mixture is 86% according to CIPAC; the wetting time is 23 s.

Example 7

Into a powder homogenizer of 3 l capacity 549.5 g of Wessalon S are introduced. To I3I g of Tridemorph 3.3 g of Triton X-I5, 26.4 g of Triton X-II4 and 3.3 g of Triton X-45 are added, and by slow stirring a homogeneous solution is prepared. This solution is added to the Wessalon S while slow by stirring. After further stirring I75 g of Carbensazim and 44 g of LAB I49202 are added. After 5 minutes of homogenization 25 g of Atlox 5320 and 37.5 g of Atlox 4862 are added, and after further 5 minutes the mixture is completed by addition of I0 g of Aerosil. The powder mixture is then granulated in 2 portions in a laboratory granulator with water (to 500 g of the powder mixture 66 ml of water are added). The granulate formed is dried in a drying oven at 60 °C till constant weight. The particle size distribution of the granulate is such that 95% of the particles are between 0.I and 0.6 mm. The floating capacity of the product obtained is 84% according to CIPAC.

Example 8

Into a homogenizer of 3 l capacity 575 g of Zeolex 4I4 are charged as a carrier. In a separate vessel I33 g of Tridemorph, 3I4 g of Triton X-I5, 3.4 g of Triton X-45 and 27.I g of Triton X-II4 are mixed by slowly stirring. A homogeneous solution is obtained, which is transferred with uniform stirring into the homogenizer. After homogenizing I33 g of Carbendazim and 33.3 g of Benalaxyl are introduced. The mixture is homogenized; thereafter 44.3 g of saccharose, I5 g of wetting agent IS (Hoechst) and 32.5 g of sodium lignine-sulfonate are added with continuous stirring. Later the mixture is stirred for further 3 minutes.

The powder mixture is ground in an air jet mill to a particle size of I0 $\mu$m. The floating capacity of the powder mixture obtained is 87% according to CIPAC; the wetting time is I8 s.

Example 9

In a laboratory powder homogenizer of 3 l capacity 648 g of Wessalon are introduced. To I33 g of Tridemorph 2 g of Triton X-I5, 2 g of Triton X-45 and I2.5 g of Triton X-II4 are added with slow stirring. The Tridemorph-solution is then slowly poured into the powder homogenizer under stirring. Thereafter while further stirring a mixture of I33 g of Carbendazim, 33 g of Metaxalyl, I5 g of wetting agent IS and I9.5 g of sodium lignine sulfonate are added. After 2 minutes of posthomogenization the powder mixture is ground in a laboratory air jet mill to a particles size of < I0 $\mu$m. The floating capacity of the powder mixture is 86% according to CIPAC; the wetting time is 23 s.

Example I0

Efficiency against downy mildew of sunflower

Sunflower germlings with the root initials, I-5 mm in length, were inoculated with a zoospore suspension (2.5 x I0⁵ spores/ml) of the downy mildew fungus (Plasmopara halsteddi (Farl.), Berlese et de Toni, Peronosporales, Oomycetes). 24 hours after inoculation the germlings were immersed into the aqueous solutions/emulsions/suspensions of the chemicals to be tested for I8 h. The germlings were then planted into sterile soil and grown in the greenhouse until the evaluation of the effectivity of treatments. All measures not described in detail here in, and the assessments were made as described by OROS and VIRANYI, Ann. appl. Biol. $\underline{110}$ (1987) 53-63.

The efficiency of treatments was characterized by the $ED_{50}$ (mg/l) value, and the significance of the synergistic effect was tested according to SUN (1950).

## Table 1

Eradicant Effect of Benomyl, Tridemorph, LAB 149202F and of their mixtures against

downy mildew of sunflower

| Active Agent* or Combination, resp. | Mass Proportion of the Active Agents | $ED_{50}$ (mg/l) | Co.T.1 |
|---|---|---|---|
| 1. LAB 149202F | - | 19.08 | |
| 2. Tridemorph | - | 500 | |
| 3. Benomyl | - | 500 | |
| 4. 2+3 | 1:1 | 500 | |
| 5. 1+2 | 1:4 | 16.86 | |
| 6. 1+2+3 | 1:4:4 | 6.55 | 1.70 |

× = The active agents and their mixtures, respectively, were applied in a suitable mass
proportion in the form of wettable powder (WP) of the following composition:
40% of the active agent, or mixtures thereof, respectively; Emulsogen I-40, TWEEN 20,
TWEEN 80, TWEEN 40, silicagel, Hyflosupercell, dextran, polyethylene glycol 20 000
and cyclohexanon, 4.0; 0.5; 0.5; 1.0; 10.0; 10.0; 22.0; 8.0; and 4.0 %, respectively.

EP 0 305 442 B1

Example II

Seed dressing against fungi causing 'damping off' (Pythium, Fusarium) in peas

Seeds of the peas (Pisum sativum cv.Gloriosa) were surface sterilized with 0.1% sublimate prior to dressing and treated thereafter with active agents formulated as 25 WP. To improve the adhesion in the dressing process, a TWEEN 80 solution was added. The dressed seeds were sown into an infested soil. 14 days after emergence both qualitative and quantitative evaluation of the fungicidal efficacy were carried out.

The efficiency was calculated as follows:

$$\text{Efficiency} \% = 100 - \frac{A \times 100}{B}, \text{ wherein}$$

A = Infection rate (%) of the treated plants,
B = Infection rate (%) of the control plants.

## Table 2

### Seed dressing against fungi causing 'damping off'

| Active Agent or Combination, resp. | Active Agent Concentration (mg/l) | | Efficiency (%) |
|---|---|---|---|
| 1. Carbendazim | 2.0 | | 9 |
| 2. Metalaxyl<br>+Aldimorph | 0.25<br>1.0 | } 1.25 | 85 |
| 3. Metalaxyl<br>+Aldimorph<br>+Carbendazim | 0.125<br>0.5<br>0.5 | } 1.25 | 92 |

## Table 3

### Seed dressing against fungi causing 'damping off'

| Active Agent or Combination, resp. | Active Agent Concentration (mg/l) | | Efficiency (%) |
|---|---|---|---|
| 1. Propineb | 1.50 | | 0 |
| 2. Metalaxyl<br>+ Tridemorph | 0.25<br>1.0 | } 1.25 | 63 |
| 3. Metalaxyl<br>+ Tridemorph<br>+ Propineb | 0.125<br>0.5<br>0.7 | } 1.325 | 91 |

## Table 4

### Seed dressing against fungi causing 'damping off'

| Active Agent or Combination, resp. | Active Agent Concentration (mg/l) | Efficiency (%) |
|---|---|---|
| 1. Benomyl | 2.50 | 28 |
| 2. LAB 149202F +Aldimorph | 0.5 } 2.0 } 2.5 | 67 |
| 3. LAB 149202F +Aldimorph +Benomyl | 0.5 } 1.0 } 2.5 1.0 } | 82 |

The used 25 WP had the following composition:
25 weight% of active ingredient or ingredients, respectively;
 5 weight% of Ca-ligninsulfonate
 5 weight% of Tween 80
17 weight% of silicic acid
45 weight% of kaolin.

Example 12

Protective effect against Phytophthora infestans on tomatoes

Solanum lycopersicum plants, cv. "Tamina", at four-leaf stage were drop-wet sprayed with the combinations on the basis of 25 WP. The inoculation of the plants with a zoospore suspension was carried out after the fungicide was dried up. After the inoculation the plants were kept for one day in a humid chamber at 16 to 18 °C and for five further days in the greenhouse at 20 °C. Thereafter the typical leaf-lesions appeared, and their extension was used as a measure for determining the degree of infection.

## Table 5

### Protective effect against <u>Phytophthora infestans</u> on tomatoes

| Active Agent or Combination, resp. | Active Agent Concentration (mg/l) | | Efficiency (%) |
|---|---|---|---|
| 1. Metalaxyl<br>   Aldimorph | 6<br>24 | } 30 | 61 |
| 2. Zineb | 30 | | 18 |
| 3. Metalaxyl<br>   Aldimorph<br>   Zineb | 2<br>8<br>20 | } 30 | 84 |

## Table 6

### Protective effect against <u>Phytophthora infestans</u> on tomatoes

| Active Agent or Combination, resp. | Active Agent Concentration (mg/l) | | Efficiency (%) |
|---|---|---|---|
| 1. Propineb | 30 | | 27 |
| 2. Metalaxyl<br>   + Tridemorph | 6.0<br>24 | } 30 | 62 |
| 3. Metalaxyl<br>   + Tridemorph<br>   + Propineb | 2.0<br>8.0<br>20.0 | } 30 | 88 |

## Table 7

### Protective effect against _Phytophthora infestans_ on tomatoes

| Active Agent or Combination, resp. | Active Agent Concentration (mg/l) | Efficiency (%) |
|---|---|---|
| 1. Maneb | 10 | 40 |
| 2. Mancozeb | 10 | 25 |
| 3. Oxadixyl<br>+ Tridemorph | 2<br>8 } 10 | 47 |
| 4. Oxadixyl<br>+ Mancozeb | 2<br>8 } 10 | 45 |
| 5. Oxadixyl<br>+ Maneb | 2<br>8 } 10 | 65 |
| 6. Oxadixyl<br>+ Tridemorph<br>+ Maneb | 1<br>4<br>4 } 9 | 78 |
| 7. Oxadixyl<br>+ Tridemorph<br>+ Mancozeb | 1<br>4<br>4 } 9 | 65 |

## Table 8

### Protective effect against _Phytophthora infestans_ on tomatoes

| Active Agent or Combination, resp. | Active Agent Concentration (mg/l) | Efficiency (%) |
|---|---|---|
| L: Metiram | 5.0 | 20 |
| 2. LAB 147202F<br>+ Tridemorph | 1.0<br>4.0 } 5.0 | 54 |
| 3. LAB 147202F<br>+ Metiram | 0.8<br>5.0 } 5.8 | 28 |
| 4. LAB 147202F<br>+ Tridemorph<br>+ Metiram | 0.5<br>2.0<br>3.0 } 5.5 | 68 |

### Example I3

Effect on the growth of Phytophthora parasitica

An acetone solution of the fungicides to be tested was admixed in a suitable amount to agar media, and 4 hours after pouring out into Petri dishes, the plates were inoculated with 3-3 mycelium cuts; after an inoculation period of 72 h the diameter of the cultures was measured. The growth inhibition was expressed, based on an untreated control, according to the following equation:

$$\text{Inhibition (\%)} = 100 - ( 100 \times \frac{X_{ij} - 7}{X_{icontr.} - 7} )$$

wherein

$X_{ij}$ = colony diameter measured on compound j (or combination thereof) contained in medium plate of the given species i,

$X_{icontr.}$ = colony diameter of species i measured on medium plate free of xenobiotics.

The data were analysed by means of variance analysis and the results are summarized in Table 9.

## Table 9

### Effect of combinations of Tridemorph + Carbendazim + + A4 or A8 on the growth (colony diameters) of Phytophthora parasitica f.sp. nicotianae on tomatoes

| Active Agent or combination, resp. | Active Agent Concentration (mg/l) | | Inhibition (%) |
|---|---|---|---|
| 1. Metalaxyl | 2.6 | | 50 |
| 2. Tridemorph + Carbendazim + RE 26745 | 1.0 1.0 0.25 | 2.25 | 81.6 |
| 3. Tridemorph + Carbendazim + Ofurace | 1.0 1.0 0.25 | 2.25 | 73.6 |

### Example I4

Control of a mixed mildew infection on cucumber leaves

Both powdery and downy mildew pathogens associated in a complex leaf disease can severely damage the leaf surface on cucumber causing a serious yield loss.

Series of leaf treatments were carried out when first symptoms occurred caused by powdery mildews (Sphaerotheca fulginea and Erysiphe cichoracearum, Erysiphales, Ascomycetes) and Downy mildew (Pseudoperonospora cubensis, Peronosporales, Oomycetes).

The disease development was checked several days after the treatment by counting the number of visible pustules on the leaves. The inhibition of the disease rate was calculated and expressed in percent of the untreated control.

The results are summarized in Table 10.

## Table 10

| Active Agent or (ratio) Combination, resp. | Active Agent Concentration (mg/l) | Inhibition of disease rate (%) |
|---|---|---|
| 1. Benalaxyl | 10 | 32 |
| 2. Tridemorph | 10 | 55 |
| 3. Benomyl | 10 | 26 |
| 4. 1+2(9:11) | 10 | 61 |
| 5. 1+3(9:10) | 10 | 21 |
| 6. 2+3(11:10) | 10 | 16 |
| 7. 1+2+3 (9:10:11) | 10 | 72 |

Example 15

Seed-dressing experiments with maize

The infection rate of a maize seed lot by Fusarium species used for laboratory purposes amounted to 29.5%, but the total contamination had reached 100% so that it was unsuitable for sowing.

After the treatment the infection rate of 4 x 100 seed pieces was evaluated following an incubation on Papa-vizas-medium. The effect of the combinations of the present invention (CHBA 6-II) was compared with the standard mixture Kolfugo Extra (20% Carbendazim) + Quinolate V-4-X (2.0 l/t + 1.0 kg/t, respectively) commonly used in Hungary. The results are summarized in Table 12.

Table 11

| Preparation | Active Agents | Mass Proportion of Active Agents | Act. Agent content (g/1000 g) | Formulation: Act. Agent Content |
|---|---|---|---|---|
| CHBA 6 | Tridemorph +BCM+LAB 149202 | 4:4:1 | 156+156+38 | 350 |
| CHBA 7 | Tridemorph + +BCM+LAB 149202 | 3:4:1 | 131+175+44 | 353 |
| CHBA 8 | Tridemorph +BCM +Benalaxyl | 4:4:1 | 133+133+33 | 300 |
| CHBA 9 | Tridemorph +BCM +Benalaxyl | 3:4:1 | 94+125+31 | 250 |
| CHBA 10 | Tridemorph +BCM +Metalaxyl | 4:4:1 | 133+133+33 | 300 |
| CHBA 11 | Tridemorph +BCM +Metalaxyl | 3:4:1 | 94+125+31 | 250 |

Apron 35 SP:Metalaxyl
Kolfugo 25 FW:BCM
Kolfugo extra:BCM
Quinolate V-4-X:Carboxin + Cu-oxyquinolate

TABLE 12

| Treatment | Dose (g/kg) | Active Agents (mg/100 g of seed) | Infection rate of seed (%) |
|---|---|---|---|
| CHBA 6 | 2.0 | 312+312+76 | 0.25 |
| CHBA 7 | 2.0 | 262+350+88 | 0.75 |
| CHBA 8 | 2.3 | 306+306+76 | 0.00 |
| CHBA 9 | 2.8 | 263+350+87 | 0.25 |
| CHBA 10 | 2.3 | 306+306+76 | 0.50 |
| CHBA 11 | 2.8 | 263+350+87 | 1.0 |
| Kolfugo Extra | 2.0 | 400 | |
| Quinolate V-4-X | 1.0 | 500+150 | 1.0 |
| Surface sterilized | - | - | 29,5 |
| Control | - | - | 100,0 |

Example I6

Seed-dressing experiments with soyabean (Acternaria, Fusarium, Aspergillus)

The efficiency of the individual treatments was evaluated first in the laboratory by determining the composition of pathogens (the contamination rate of 2 x I00 seeds of soyabean). In a field experiment, the yield of soyabean treated with different fungicides was measured, and expressed in kg/lot (2 m$^2$).

The results obtained are summarized in Table I3.

EP 0 305 442 B1

Table 13

| TREATMENT | | | Number of Infected Seeds | YIELD $(kg/2m^2)$ (mean of 4 repetitions) | K(%) |
|---|---|---|---|---|---|
| Fungicide | Dose of formulation (g/kg seed) | Dose of Active Ingredient (mg/kg seed) | | | |
| CHBA 6 (TKL) | 2.0 | 312+312+76 | 5.5 | 2.15 | 108.6 |
| CHBA 7 (TKL) | 2.0 | 262+350+88 | 1.5 | 2.18 | 110.1 |
| CHBA 8 (TKB) | 2.3 | 306+306+76 | 2.5 | 2.30 | 116.2 |
| CHBA 9 (TKB) | 2.8 | 263+350+87 | 1.0 | 2.45 | 123.8 |
| CHBA 10 (TKM) | 2.3 | 306+306+76 | 1.0 | 2.05 | 103.5 |
| CHBA 11 (TKM) | 2.8 | 263+350+87 | 3.5 | 2.18 | 110.1 |
| Apron 35 SD | 2.0 | 700 | 16 | 2.03 | 102.5 |
| Kolfugo 25 FW | 2.8 | 700 | 11 | 2.07 | 104.5 |
| Control | – | – | 76.5 | 1.98 | 100.0 |

EP 0 305 442 B1

Example I7

Possibility of controlling the population of pathogenic fungi associated with the root rot complex of seedlings

Plants at seeding stage are endangered by a number of soil- and seed-borne seedling- and root diseases caused by fungi of various taxonomic position (usually named pathogene "associated with the root rot complex" of plants - cf. G. DIXON : Vegetable Crop Diseases, The Macmillan Press Ltd, London, 1981).

It is possible to eliminate certain pathogenic species with an efficient fungicide. However, the species non-sensitive to a given compound can increase in an explosive manner. The use of broad-spectrum fungicides may overcome this problem. Such compounds, however, are often harmful pollutants of the environment. The accumulation of toxic materials (e.g. mercury, tin, aluminium, or carcinogenic metabolites, such as ETU) can not be excluded, and one must renounce their use. Against the highly efficient and selective fungicide preparations that are harmless to nature and mankind (e.g. Carbendazim, Metalaxyl), the target organisms (plant parasites) become quickly resistant. The resistance is due to genetic reasons. In the population of the pathogens there appear individuals that carry genes responsible for the reduction of fungicide sensitivity. Individuals carrying such genes that had been treated with the given fungicide will increase in number dramatically. Moreover, in the soil fungi of various taxonomic position are associated with the root rot complex that makes it necessary to use broad-spectrum fungicides. The use of especially selected and optimized mixtures is necessary due to the requirement of treatment as highly selective as possible and at the same time combating the formation of established populations resistant to the given fungicides. In Table I4, a model experiment is shown, which proves that in the case of a fungal population consisting of individuals of different fungicide sensitivity and associated with root rot complex, a successful control can be achieved by appropriate combination of synergistically interacting fungicides. Beside the fact, that the pathogenes associated with root rot complex can be controlled with certainty, a synergistic fungicide combination will reduce costs and decrease the pesticide pressure to nature simply due to its increased efficacy vis-à-vis the target organisms.

Furthermore there is a favorable economic effect: Due to the reduced amount of chemicals to be applied for achieving the same effect, these result reduced costs of application, and increased yields due to a reduced probability of resistance development.

Performance of experiments

By means of somatic hybridization (Molnar et. al., Exp. Mycol. 9 (1985) 326-333.), and by means of mass selection of spontaneous mutants (Oros, Tag.-Ber. Akad. LdW. DDR., Berlin, 253 (1987) S I77-I83), respectively, Fusarium oxysporum and Phytophthora parasitica strains/clones of extremely different fungicide sensitivity were prepared for the experiments. The efficacy of the fungicides was determined in conventional agar plates by measuring the radial mycelium growth after 48 hours.

The fungicidal effect was characterized by the percentage of inhibition of radial growth of colonies.

As the survival of a population in the presence of a harmful factor is always determined by the most resistant part of this population, the Most Potent Treatment (MPT) was used for comparing efficacies in the experiment.

18

## Table 14

Control of mixed populations consisting of <u>Fusarium oxysporum</u> and <u>Phytophthora parasitica</u> individuals of different fungicide sensitivity in the case of simultaneous occurence

| Active Agents or Combinations, resp. | (ratio) | Inhibition of fungal species [b] | | $(ED_{50}, mg/\ell)$ |
|---|---|---|---|---|
| | | <u>F. oxysproum</u> [a] | <u>P. parasitica</u> [b] var. nicotianae | $T_i/T_{MPT}$ [c] |
| Carbendazim | | 42.7 | <u>125</u> | 12.5 |
| Tridemorph | | 86.6 | 518 | 51.8 |
| Metalaxyl | | <u>500</u> | 4.2 | 50 |
| 1+2 | (1:1) | 8.1 | <u>105</u> | 10.5 |
| 1+3 | (4:1) | 57.2 | 16.9 | 5.7 |
| 2+3 | (4:1) | <u>117</u> | 9.05 | 11.7 |
| 1+2+3 | (4:4:1) | 8.9 | <u>10.07</u> | 1.0 |

a : A population consisting of strains resistant and strains sensitive to benomyl. Ratio 1:1

b : A population consisting of strains resistant and strains sensitive to metalaxyl. Ratio 1:1.

c : $T_i/T_{MPT}$ = the factor, which shows how many times the concentration of the preparation should be increased to have the same effect as it was obtained by application of the most potent one (No. 7).

$T_i$ = $ED_{50}$ value (mg/$\ell$) of the "i" treatment, and

$T_{MPT}$ = the $ED_{50}$ value (mg/$\ell$) of the most potent treatment (MPT).

EP 0 305 442 B1

**Claims**

1. Fungicide compositions, containing as active ingredient a mixture of
    (A) One of the following fungicides:
        ($A_1$)Methyl-N-(2,6-dimethylphenyl)-N-(2'-methoxyacetyl)-D,L-alaninate (Metalaxyl),
        ($A_2$)methyl-N-(2,6-dimethylphenyl)-N-furoyl-(2)-D,L-alaninate (Furalaxyl),
        ($A_3$)methyl-N-(phenylacetyl-N-(2,6-dimethylphenyl)-D,L-alaninate (Benalaxyl),
        ($A_4$)(±)-α-(2-chloro-N-(2,6-dimethylphenyl)-acetamido)-γ-butyrolactone (Ofurace),
        ($A_5$)(±)-α-[N-(3-chlorophenyl)-cyclopropane-carboxamidol]-γ-butyrolactone (Cyprofuram),
        ($A_5$)2-methoxy-N-(2-oxo-1,3-oxazolidin-3-yl-aceto-2'6'-xylidide (Oxadixyl),
        ($A_7$)methyl-N-isoxazol-5-yl-N-(2,6-dimethylphinyl)-D,L-alaninate,
        ($A_5$)N-(2,6-dimethylphenyl)-2-methoxy-N-(tetrahydro-2-oxofuranyl)-acetamide,
    and
    (B) one of the following morpholine fungicides:
        ($B_1$) 2,6-Dimethyl-4-tridecylmorpholine (Tridemorph),
        ($B_2$) 4-cyclododecyl-2,6-dimethylmorpholine (Dodemorph),
        ($B_3$)(±)-cis-4-[3-(4-tert-butylphenyl)-2-methylpropyl]-2,6-dimethylyorpholine (Fenpropimorph),
        ($B_4$)mixture of N-alkyl($C_{12}$)-2,6-dimethylmorpholine and
        N-alkyl($C_{12}$)-2,5-dimethylmorpholine (Aldimorph),
    together with either
    (C) one of the following fungicides:
        ($C_1$) Diethyl-4,4'-(o-phenylene)-bis(3-thioallophanate) (Thiophanate),
        ($C_2$) dimethyl-4,4'-(o-phenylene)-bis(3-thioallophanate) (Thiophanat-Methyl),
        ($C_3$) methyl-benzimidazol-2-yl-carbamate (Carbendazim),
        ($C_4$) methyl-1-(butylcarbamoyl)-benzimidazol-2-yl-carbamate (Benomyl),
        ($C_5$) 2-thiazol-4-yl-1H-benzimidazole (Thiabendazol),
    or
    (D) one of the following dithiocarbamate or disulfide fungicides:
        ($D_1$) Zinc ethylene-bis(dithiocarbamate) (polymeric) (Zineb),
        ($D_2$) manganese ethylene-bis(dithiocarbamate) (polymeric) (Maneb),
        ($D_3$) manganese ethylene-bis(dithiocarbamate) (polymeric) complex with zinc salt (Mancozeb),
        ($D_4$) tris[zink ammoniate-ethylene-bis(dithiocarbamate)]-tetrahydro-1,2,4,7-dithiadiazocin-3,8-dithione (polymeric) (Metiram),
        ($D_5$) zinc propylene-bis(dithiocarbamate) (polymeric) (Propineb),
        ($D_6$) mixture of tris[zink ammoniate-ethylene-bis-(dithiocarbamate)]-tetrahydro-1,2,4,7-dithiadiazocin-3,8-dithione (polymeric) (Metiram) and
        zinc propylene-bis(dithiocarbamate) (Propineb)
        in a ratio of 1:3 (Polycarbazin),
    wherein the weight ratio of the components A:B:C is 1:3-5:1-6. and the weight ratio of the components A:B:D is 1:3-5:5-10, and the ratio A:B:C may also be in the case of the mixture $A_7B_4C_4$ equal to 1:2:2, and in the case of the mixture $A_3B_1C_4$ equal to 1:1,11:1,22, and the ratio A:B:D may also be in the case of the mixtures $A_5B_1D_2$ and $A_6B_1D_3$ equal to 1:4:4,
        together with a fungicidally acceptable inert carrier.

2. Fungicide compositions according to claim 1, wherein the weight ratio of the components A:B:C is 1:4:4, or the weight ratio of the components A:B:D is 1:4:10.

3. Fungicide compositions according to claim 1 or 2 containing as active ingredient a mixture of
    (A) one of the fungicides $A_1$ to $A_8$,
    (B) one of the fungicides $B_1$ and $B_4$,
        and
    (C) one of the fungicides $C_3$ and $C_4$,

4. Fungicide compositions according to one of claims 1 to 3, containing as active ingredient a mixture of
    (A) one of the fungicides $A_3$, $A_4$ and $A_6$,
    (B) one of the fungicides $B_1$ and $B_4$,

and

(C) the fungicide $C_3$.

5. Fungicide compositions according to claim 1 or 2, containing as active ingredient a mixture of
    (A) the fungicide $A_1$,
    (B) one of the fungicides $B_1$ and $B_4$,
        and
    (C) the fungicide $C_3$.

6. Fungicide compositions according to claim 1, containing as active ingredient a mixture of
    (A) one of the fungicides $A_1$ to $A_8$,
    (B) the fungicide $B_1$,
        and
    (D) one of the fungicides $D_2$, $D_3$, $D_4$ and $D_5$,
    wherein the weight ratio of the components A:B:D is 1:3,5-5:10.

7. Fungicide composition according to claim 1, containing as active ingredient a mixture of
    (A) the fungicide $A_1$,
    (B) the fungicide $B_1$,
        and
    (D) the fungicide $D_5$,
    wherein the weight ratio of the components A:B:D is 1:4:5-6.

8. Fungicide composition according to claim 1, containing as active ingredient a mixture of
    (A) the fungicide $A_1$,
    (B) the fungicide $B_1$,
        and
    (D) the fungicide $D_1$,
    wherein the weight ratio of the components A:B:D is 1:4:10.

9. Fungicide compositions according to claim 1, containing as active ingredient a mixture of
    (A) the fungicide $A_6$,
    (B) one of the fungicides $B_1$ and $B_4$,
        and
    (D) one of the fungicides $D_2$, $D_3$ and $D_5$,
    wherein the weight ratio of the components A:B:D is 1:4:4-10.

10. Method for fungicidal treatment of plants, particularly cultivated plants, susceptible to infection by pathogenic fungi,
    characterized by administering a fungicidally effective amount of one of the compositions according to claims 1 to 9 to the plants.

**Patentansprüche**

1. Fungizide Zusammensetzungen, die als Wirkstoff ein Gemisch aus
    (A) einem der folgenden Fungizide:
        ($A_1$) Methyl-N-(2,6-dimethylphenyl)-N-(2'-methoxyacetyl)-D,L-alaninat (Metalaxyl),
        ($A_2$) Methyl-N-(2,6-dimethylphenyl)-N-furoyl-(2)-D,L-alaninat (Furalaxyl),
        ($A_3$) Methyl-N-phenylacetyl-N-(2,6-dimethylphenyl)-D,L-alaninat (Benalaxyl),
        ($A_4$) ($\pm$)-$\alpha$-[2-Chlor-N-(2,6-dimethylphenyl)-acetamido]-$\gamma$-butyrolacton (Ofurace),
        ($A_5$)($\pm$)-$\alpha$-[N-(3-Chlorphenyl)-cyclopropancarboxamido]-$\gamma$-butyrolacton (Cyprofuram),
        ($A_5$) 2-Methoxy-N-(2-oxo-1,3-oxazolidin-3-yl)-aceto-2',6'-xylidid (Oxadixyl),
        ($A_7$) Methyl-N-isoxazol-5-yl-N-(2,6-dimethylphenyl)-D,L-alaninat (LAB 149202 F),
        ($A_5$)N-(2,6-Dimethylphenyl)-2-methoxy-N-(tetrahydro-2-oxofuranyl)-acetamid (RE 26745),
    und
    (B) einem der folgenden Morpholinfungizide:
        ($B_1$) 2,6-Dimethyl-4-tridecylmorpholin (Tridemorph),
        ($B_2$) 4-Cyclododecyl-2,6-dimethylmorpholin (Dodemorph),

(B$_3$) (±)-cis-4-[3-(4-tert-Butylphenyl)-2-methylpropyl]-2,6-dimethylmorpholin (Fenpropimorph),
(B$_4$) Gemisch aus N-Alkyl(C$_{12}$)-2,6-dimethylmorpholin und
N-Alkyl(C$_{12}$)-2,5-dimethylmorpholin (Aldimorph),
zusammen mit entweder
(C) einem der folgenden Fungizide:
(C$_1$) Diethyl-4,4'-(o-phenylen)-bis(3-thioallophanat) (Thiophanat),
(C$_2$)Dimethyl-4,4'-(o-phenylen)-bis(3-thioallophanat) (Thiophanat-Methyl),
(C$_3$)Methylbenzimidazol-2-yl-carbamat (Carbendazim oder BCM),
(C$_4$)Methyl-1-(butylcarbamoyl)-benzimidazol-2-yl-carbamat (Benomyl),
(C$_5$)2-Thiazol-4-yl-1H-benzimidazol (Thiabendazol)
oder
(D) einem der folgenden Dithiocarbamat- oder Disulfidfungizide:
(D$_1$) Zink-ethylen-bis(dithiocarbamat) (polymer) (Zineb),
(D$_2$) Mangan-ethylen-bis(dithiocarbamat) (polymer) (Maneb),
(D$_3$) Mangan-ethylen-bis(dithiocarbamat) (polymer), Komplex mit Zinksalz (Mancozeb),
(D$_4$)  Tris[Zinkammoniat-ethylen-bis(dithiocarbamat)]-tetrahydro-1,2,4,7-dithiadiazocin-3,8-dithion
(polymer) (Metiram),
(D$_5$) Zink-propylen-bis(dithiocarbamat) (polymer) (Propineb),
(D$_6$) Gemisch aus Tris[Zinkammoniat-ethylen-bis(dithiocarbamat)]-tetrahydro-1,2,4,7-dithiadiazocin-3,8-dithion (polymer) (Metiram) und
Zink-propylen-bis(dithiocarbamat) (Propineb), in einem Verhältnis von 1:3 (Polycarbazin),
enthält,
worin das Massenverhältnis der Komponenten A:B:C 1:3-5:1-6 und das Massenverhältnis der Komponenten A:B:D 1:3-5:5-10 beträgt und das Verhältnis A:B:C im Fall des Gemisches A$_7$B$_4$C$_4$ gleich 1:2:2 und im
Fall des Gemisches A$_3$B$_1$C$_4$ gleich 1:1,11:1,22 sein kann und das Verhältnis A:B:D im Fall der Gemische
A$_6$B$_1$D$_2$ und A$_6$B$_1$D$_3$ gleich 1:4:4 sein kann,
zusammen mit einem hinsichtlich der Fungizidwirkung akzeptablen inerten Träger.

2. Fungizide Zusammensetzungen nach Anspruch 1, worin das Massenverhältnis der Komponenten A:B:C
1:4:4 oder das Massenverhältnis der Komponenten A:B:D 1:4:10 beträgt.

3. Fungizide Zusammensetzungen nach Anspruch 1 oder 2, die als Wirkstoff ein Gemisch aus
(A) einem der Fungizide A$_1$ bis A$_8$,
(B) einem der Fungizide B$_1$ und B$_4$
und
(C) einem der Fungizide C$_3$ und C$_4$
enthalten.

4. Fungizide Zusammensetzungen nach einem der Ansprüche 1 bis 3, die als Wirkstoff ein Gemisch aus
(A) einem der Fungizide A$_3$, A$_4$ und A$_6$,
(B) einem der Fungizide B$_1$ und B$_4$
und
(C) das Fungizid C$_3$
enthalten.

5. Fungizide Zusammensetzungen nach Anspruch 1 oder 2, die als Wirkstoff ein Gemisch aus
(A) Fungizid A$_1$,
(B) einem der Fungizide B$_1$ und B$_4$
und
(C) Fungizid C$_3$
enthalten.

6. Fungizide Zusammensetzungen nach Anspruch 1, die als Wirkstoff ein Gemisch aus
(A) einem der Fungizide A$_1$ bis A$_8$,
(B) Fungizid B$_1$
und
(D) einem der Fungizide D$_2$, D$_3$, D$_4$ und D$_5$
enthalten,

worin das Massenverhältnis der Komponenten A:B:D 1:3,5-5:10 beträgt.

7. Fungizide Zusammensetzung nach Anspruch 1, die als Wirkstoff ein Gemisch aus
  (A) Fungizid $A_1$,
  (B) Fungizid $B_1$
    und
  (D) Fungizid $D_5$
  enthält,
  worin das Massenverhältnis der Komponenten A:B:D 1:4:5-6 beträgt.

8. Fungizide Zusammensetzung nach Anspruch 1, die als Wirkstoff ein Gemisch aus
  (A) Fungizid $A_1$,
  (B) Fungizid $B_1$
    und
  (D) Fungizid $D_1$
  enthält,
  worin das Massenverhältnis der Komponenten A:B:D 1:4:10 beträgt.

9. Fungizide Zusammensetzungen nach Anspruch 1, die als Wirkstoff ein Gemisch aus
  (A) Fungizid $A_6$,
  (B) einem der Fungizide $B_1$ und $B_4$
    und
  (D) einem der Fungizide $D_2$, $D_3$ und $D_5$
  enthalten,
  worin das Massenverhältnis der Komponenten A:B:D 1:4:4-10 beträgt.

10. Verfahren zur fungiziden Behandlung von Pflanzen, insbesondere Kulturpflanzen, die von pathogenen Pilzen befallen werden können,
  dadurch gekennzeichnet, daß
  eine der Zusammensetzungen nach den Ansprüchen 1 bis 9 den Pflanzen in einer fungizidwirksamen Menge verabreicht wird.


**Revendications**

1. Compositions fongicides contenant comme ingrédient actif un mélange
  (A) d'un des fongicides suivants:
    ($A_1$) méthyl-N-(2,6-diméthylphényl)-N-(2'-méthoxyacétyl)-D,L-alaninate (Metalaxyl),
    ($A_2$) méthyl-N-(2,6-diméthylphényl)-N-furoyl-(2)-D,L-alaninate (Furalaxyl),
    ($A_3$) méthyl-N-(phénylacétyl-N-(2,6-diméthylphényl)-D,L-alaninate (Benalaxyl),
    ($A_4$) (±)-α-(2-chloro-N-(2,6-diméthylphényl)-acétamido)-γ-butyrolactone (Ofurace),
    ($A_6$) (±)-α-N-(3-chlorophényl)-cyclopropane-carboxamido]-γ-butyrolactone (Cyprofuram),
    ($A_6$) 2-méthoxy-N-(2-oxo-1,3-oxazolidin-3-yl-acéto-2'6'-xylide (Oxadixyl),
    ($A_7$) méthyl-N-isoxazol-5-yl-N-(2,6-diméthylphényl)-D,L-alaninate,
    ($A_6$) N-(2,6-diméthylphényl)-2-méthoxy-N-(tétrahydro-2-oxofuranyl)-acétamide,
  et
  (B) d'un des fongicides à base de morpholine suivants:
    ($B_1$) 2,6-diméthyl-4-tridécylmorpholine (Tridemorph),
    ($B_2$) 4-cyclododécyl-2,6-diméthylmorpholine (Dodemorph)
    ($B_3$) (±)-cis-4- 3-(4-tert-butylphényl)-2-méthylpropyl]-2,6-diméthylmorpholine (Fenpropimorph),
    ($B_4$) un mélange de N-alkyl($C_{12}$)-2,6-diméthylmorpholine et de N-alkyl($C_{12}$)-2,5-diméthylmorpholine (Aldimorph),
  avec soit
  (C) l'un des fongicides suivants:
    ($C_1$) diéthyl-4,4'-(o-phénylène)-bis(3-thioallophanate) (Thiophanate),
    ($C_2$) diméthyl-4,4'-(o-phénylène)-bis(3-thioallophanate) (Thiophanat-Methyl)
    ($C_3$) méthyl-benzimidazol-2-yl-carbamate (Carbendazim),
    ($C_4$) méthyl-1-(butylcarbamoyl)-benzimidazol-2-yl-carbamate (Benomyl),

(C$_5$) 2-thiazol-4-yl-1H-benzimidazole (Thiabendazol),

ou

(D) l'un des fongicides à base de disulfure ou de dithiocarbamate suivants:

(D$_1$) éthylène-bis(dithiocarbamate) de zinc (polymère) (Zineb),

(D$_2$) éthylène-bis(dithiocarbamate) de manganèse (polymère) (Maneb),

(D$_3$) complexe éthylène-bis(dithiocarbamate) de manganèse (polymère) avec un sel de zinc (Mancozeb),

(D$_4$) tris [ammoniate-éthylène-bis(dithiocarbamate) de zinc -tétrahydro-1,2,4,7-dithiadiazocin-3,8-dithione (polymère) (Metiram),

(D$_5$) propylène-bis(dithiocarbamate) de zinc (polymère) (Propineb),

(D$_6$) mélange de tris [ammoniate-éthylène-bis-(dithiocarbamate) de zinc]-tétrahydro-1,2,4,7-dithiadiazocin-3,8-dithione (polymère) (Metiram) et

propylène-bis(dithiocarbamate) de zinc (Propineb) dans un rapport de 1/3 (Polycarbazine),

dans lesquelles le rapport pondéral des composants A/B/C est de 1/(3 à 5)/(1 à 6), et le rapport pondéral des composants A/B/D est de 1/(3 à 5)/(5 à 10) et le rapport A/B/C peut également être dans le cas du mélange A$_7$B$_4$C$_4$ égal à 1/2/2, et dans la cas du mélange A$_3$B$_1$C$_4$ égal à 1/(1 ou 11)/(1 ou 22), et le rapport A/B/D peut également être dans le cas des mélanges A$_6$B$_1$D$_2$ et A$_6$B$_1$D$_3$ égal à 1/4/4,

ensemble avec un support inerte acceptable sur le plan fongicide.

2. Compositions fongicides selon la revendication 1, dans laquelle le rapport pondéral des composants A/B/C est de 1/4/4, ou le rapport pondéral des composants A/B/D est de 1/4/10.

3. Composition fongicides selon la revendication 1 ou 2 contenant comme ingrédient actif, un mélange

(A) d'un des fongicides A$_1$ à A$_6$,

(B) d'un des fongicides B$_1$ et B$_4$,

et

(C) d'un des fongicides C$_3$ et C$_4$.

4. Compositions fongicides selon l'une des revendications 1 à 3, contenant comme ingrédient actif un mélange

(A) d'un des fongicides A$_3$, A$_4$ et A$_6$,

(B) d'un des fongicides B$_1$ et B$_4$,

et

(C) du fongicide C$_3$

5. Compositions fongicides selon la revendication 1 ou 2, contenant comme ingrédient actif un mélange

(A) du fongicide A$_1$,

(B) d'un des fongicides B$_1$ et B$_4$,

et

(C) du fongicide C$_3$.

6. Compositions fongicides selon la revendication 1, contenant comme ingrédient actif un mélange

(A) d'un des fongicides A$_1$ à A$_6$,

(B) du fongicide B$_1$,

et

(D) d'un des fongicides D$_2$, D$_3$ D$_4$ et D$_5$,

dans lesquelles le rapport pondéral des composants A/B/D est de 1/(3,5 à 5)/10.

7. Composition fongicide selon la revendication 1, contenant comme ingrédient actif un mélange

(A) du fongicide A$_1$,

(B) du fongicide B$_1$,

et

(D) du fongicide D$_5$,

dans laquelle le rapport pondéral des composants A/B/D est de 1/4/(5 à 6).

8. Composition fongicide selon la revendication 1, contenant comme ingrédient actif un mélange

(A) du fongicide A$_1$,

(B) du fongicide B$_1$,

et

(D) du fongicide $D_1$,

dans laquelle le rapport pondéral des composants A/B/D est de 1/4/10.

9. Compositions fongicides selon la revendication 1, contenant comme ingrédient actif un mélange

(A) du fongicide $A_6$,

(B) d'un des fongicides $B_1$ et $B_4$,

et

(D) d'un des fongicides $D_2$, $D_3$ et $D_5$,

dans lesquelles le rapport pondéral des composés A/B/D est de 1/4/(4 à 10).

10. Procédé de traitement fongicide des plantes, en particulier des plantes cultivées, susceptibles d'être infectées par des champignons pathogéniques,

caractérisé par l'administration, sur les plantes, d'une quantité efficace sur le plan fongicide d'une des compositions selon les revendications 1 à 9.